# EUROPEAN PATENT SPECIFICATION

(11) **EP 2 933 729 B1**
(45) Date of publication and mention of the grant of the patent: **21.11.2018**
(21) Application number: 13862151.1
(22) Date of filing: 21.08.2013
(51) Int. Cl.: G06F 8/65, H04L 29/08, H04L 29/06

(54) **METHOD FOR PROVIDING CLOUD SERVICE, AND SYSTEM AND APPARATUS THEREFOR**
VERFAHREN ZUR BEREITSTELLUNG EINES CLOUD-DIENSTES SOWIE SYSTEM UND VORRICHTUNG DAFÜR
PROCÉDÉ POUR LA FOURNITURE DE SERVICE INFONUAGIQUE, ET SYSTÈME ET APPAREIL CORRESPONDANTS

(30) Priority: 12.12.2012 KR 20120144193; 12.12.2012 KR 20120144194
(43) Date of publication of application: 21.10.2015
(73) Proprietor: SK TechX Co., Ltd., Seoul 06159 (KR)
(72) Inventor: BAE, Taemeon, Seoul 138-916 (KR)
(74) Representative: Fraser, Karen
(86) International application number: PCT/KR2013/007494
(87) International publication number: WO 2014/092289

(56) References cited:
- EP-A1- 2 254 054
- WO-A2-2004/038614
- KR-A- 20010 093 237
- KR-B1- 100 625 383
- KR-B1- 101 088 673
- US-A1- 2004 266 408
- US-A1- 2009 036 105
- US-A1- 2011 131 329

## Description

### [Technical Field]

The present invention relates to a method for providing a cloud service, and more particularly, to a cloud service providing method for, when an application of which running has been requested by a client terminal cannot be run on the client terminal, making it possible to run the application on the client terminal or another application apparatus having the application, and a system and an apparatus for the method.

### [Background Art]

With the development of technology, the number of applications that can be run on a user's terminal is increasing, and the specifications of the terminal required to run the applications are rapidly getting higher.

However, in order to run high-performance applications, such as three-dimensional (3D) games, users should determine in advance whether terminals that they intend to use are suitable to run the high-performance applications, and when the users' terminals have insufficient specifications to run the high-performance applications, the users cannot use the applications.

For this reason, a cloud service that makes it possible to access a service provided by a service provider via a network and to use an application regardless of the specifications of a user's terminal is attracting attention.

Currently, a screen virtualization-based cloud service is under development. In the screen virtualization-based cloud service, the result screen of an application run on a server at a user's request is transmitted to the user's terminal in real time, such that the user can use the application with ease even if the user does not have the application in his or her terminal.

For such a cloud service, a server should have applications that can be run on users' terminals in advance.

For example, when a user requests an application supporting a joystick as an input device, if the user's terminal has no joystick, the user cannot use the application normally. To solve such a problem, a server that provides a cloud service should have applications suitable for users' terminals in advance. However, when the server has all the applications suitable for the users' terminals, high cost is incurred.

In addition, for a cloud service, a server should have applications that can be run on users' terminals in advance. Here, even if the server has suitable applications in consideration of various kinds of users' terminals, when the server cannot provide an application to a user's terminal for various reasons, for example, a trouble in a network and server overload, it is difficult to handle the problem.

Patent application US 2009/00361005 discloses a system in which client terminals request a remote server to execute an application in a way that is adapted to the capabilities of the client terminal.

### [Disclosure]

### [Technical Problem]

The present invention is directed to providing a cloud service providing method for, when an application of which running has been requested by a client terminal cannot be run on the client terminal, a service apparatus to convert the application to be runnable, to run the converted application, and then to provide the result information of running of the converted application to the client terminal, and a system and an apparatus for the method.

The present invention is also directed to providing a cloud service providing method in which, when an application provision apparatus having an application of which running has been requested by any one client terminal cannot provide the application to the client terminal, running of the application may be requested from another application provision apparatus having the application, and a system and an apparatus for the method.

### [Technical Solution]

One aspect of the present invention provides a cloud system according to claim 1.

Another aspect of the present invention provides a service apparatus according to claim 2.

When the request to run the particular application is received from the client terminal, if there is no previously stored resource information of the client terminal, the apparatus control unit may request resource collection from the client terminal and then check the resource information.

After determining whether or not the application is convertible, if the application is unconvertible, the apparatus control unit may check information on resources necessary for the client terminal to run the application, and then transmit a guide message including the necessary resource information to the client terminal.

When the client terminal has no input device supported by the application, the apparatus control unit may convert the application to be suitable for an input device of the client terminal.

When a resolution supported by the application differs from a resolution of the client terminal, the apparatus control unit may convert the application to be suitable for the resolution of the client terminal.

After checking a decoder of the client terminal, the apparatus control unit may encode the application at a compression rate supported by the decoder and transmit the encoded application to the client terminal.

Another aspect of the present invention provides a method for providing a cloud service according to claim 7.

Here, the method may further include, before the receiving of the request, receiving information on retained applications and minimal specification information of a client terminal capable of running the applications from one or more application provision apparatuses and storing the received information, and the converting of the application may include receiving the application from an application provision apparatus having the application and then converting the application.

Also, the method may further include, after the determining of whether or not the application can be run on the client terminal, when it is determined that the application can be run on the client terminal, running the application and then encoding and transmitting screen data of the running to the client terminal in real time.

Here, the converting of the application may include: when it is determined that the application cannot be run on the client terminal, determining whether the application is convertible; when it is determined that the application is unconvertible, checking information on resources necessary for the client terminal to run the application; and transmitting a guide message including the checked necessary resource information to the client terminal.

Additionally, another aspect of the present invention provides a computer-readable recording medium according to claim 10 storing a program for executing the method for providing a cloud service as described above.

### [Advantageous Effects]

According to a method for providing a cloud service and a system and apparatus for the method, when an application of which running has been requested by a client terminal cannot be run on the client terminal, a service apparatus converts the application to be runnable, runs the converted application, and then provides the result information of running of the converted application to the client terminal.

For this reason, even if the service apparatus does not have in advance applications in which all the specifications of the client terminal are taken into consideration, the service apparatus can efficiently provide the service by converting only a necessary portion according to the specifications of the client terminal and providing the result information of running of the converted application to the client terminal, and a user also can use all kinds of applications on his or her client terminal.

In addition, according to the method for providing a cloud service and the system and apparatus for the method, when an application provision apparatus having an application of which running has been requested by a client terminal cannot provide the application to the client terminal normally due to overload or other reasons, a service apparatus becomes aware of the fact and requests running of the application from another application provision apparatus having the application, such that the client terminal can smoothly use the application.

Furthermore, in the present invention, a service apparatus connects an appropriate application provision apparatus with a client terminal according to the situations of application provision apparatuses for providing applications, such that a cloud service can be flexibly provided even if the number of client terminals requesting the cloud service increases.

### [Description of Drawings]

FIG. 1 is a diagram schematically showing the constitution of a cloud system according to embodiments of the present invention.
FIG. 2 is a block diagram showing the main constitution of a client terminal according to embodiments of the present invention.
FIG. 3 is a block diagram showing the main constitution of a service apparatus according to embodiments of the present invention.
FIG. 4 is a data flowchart illustrating a method for providing a cloud service according to a first embodiment of the present invention.
FIG. 5 is a flowchart illustrating a method for a service apparatus to provide a cloud service according to the first embodiment of the present invention.
FIG. 6 is a data flowchart illustrating a method for providing a cloud service according to a second embodiment of the present invention.
FIG. 7 is a flowchart illustrating a method for a service apparatus to provide a cloud service according to the second embodiment of the present invention.

### [Modes of the Invention]

Hereinafter, exemplary embodiments of the present invention that enable those of ordinary skill in the art of the present invention to easily implement the present invention will be described in detail with reference to the accompanying drawings. In the detailed description of exemplary embodiments of the present invention, when detailed descriptions on the known art related to the present invention are determined to unnecessarily obscure the gist of the present invention, the detailed descriptions will be omitted. This is intended not to obscure but to clearly deliver the core of the present invention by omitting unnecessary descriptions. The terms, such as "first" and "second," are used to describe various elements. The terms are merely used to distinguish one element from other elements, but are not used to limit the elements.

Throughout the drawings, like numerals refer to portions that perform similar functions and exert similar effects.

Cloud systems according to embodiments of the present invention will be described below. First, a cloud system according to a first embodiment of the present invention will be described.

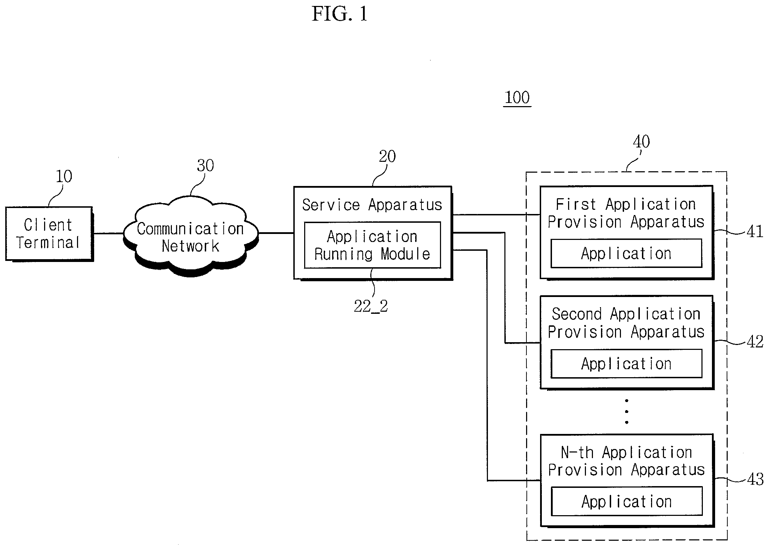

FIG. 1 is a diagram schematically showing the constitution of a cloud system according to embodiments of the present invention.

Referring to FIG. 1, a cloud system 100 according to the first embodiment of the present invention may include one or more client terminals 10, a service apparatus 20 that runs an application at a request of a client terminal 10 and transmits the result information of running of the application to the client terminal 10, and a communication network 30.

In addition to these, a plurality of application provision apparatuses 40 that provide a plurality of applications may be further included.

Descriptions of the respective components are as follows: The client terminal 10 denotes a user's terminal that establishes a connection to the service apparatus 20 via the communication network 30 and may use various functions provided by the service apparatus 20. In particular, the client terminal 10 according to embodiments of the present invention may connect to the service apparatus 20 to request running of a particular application among a plurality of applications provided by the service apparatus 20, receive the result information of running of the application from the service apparatus 20, and output the received result information, thereby using the application.

The service apparatus 20 provides cloud-based applications to the plurality of client terminals 10. When a request to run a particular application is received from any one client terminal 10, the service apparatus 20 serves to bring the application from an application provision apparatus 40 having the application, run the application, and then transmit only the result of running to the client terminal 10.

On the other hand, when the service apparatus 20 has stored the application therein, the service apparatus 20 may run the application without operating in conjunction with the application provision apparatus 40 and then transmit the result information of running to the client terminal 10.

At this time, more specifically, the service apparatus 20 encodes the screen data of running of the application in units of frames in real time, and transmits the encoded data to the client terminal 10.

To this end, the service apparatus 20 includes a plurality of applications, and may include an application running module 22_2 that may run the applications and transmit results of the running to the client terminals 10.

In particular, when a request to run a particular application is received from any one client terminal 10 while the service apparatus 20 of the present invention has stored therein retained application information of the plurality of application provision apparatuses 40 and minimal specification information of a client terminal capable of running the applications, the service apparatus 20 checks resource information of the client terminal 10 and compares the resource information of the client terminal 10 with the minimal specification information of a client terminal capable of running the application stored in advance to correspond to the application.

When it is determined that the client terminal 10 can run the application as the result of the comparison, the service apparatus 20 runs the application and then transmits the result information of running of the application to the client terminal 10. However, when it is determined that the client terminal 10 cannot run the application, the service apparatus 20 may convert the application to be runnable on the client terminal 10, run the converted application, and then provide the result of running to the client terminal 10.

Here, when the application is unconvertible, the service apparatus 20 may check resource information necessary for the client terminal 10 to run the application, and then transmit a guide message about the necessary resource information to the client terminal 10.

In this way, the user may use all the applications provided by the service apparatus 20, and also the service apparatus 20 providing a cloud service may efficiently use resources by converting an application to be suitable for the client terminal 10 and then providing the converted application even if the service apparatus 20 does not have an application suitable for the client terminal in advance in consideration of all cases.

In addition, the plurality of application provision apparatuses 40 have one or more applications, and serve to provide the applications at a request of the service apparatus 20. Here, the applications provided to the service apparatus 20 can be any applications including a text-editing application, a game application, a media, such as music or movie, player application, and other service applications.

In an embodiment of the present invention, a case in which an application provision apparatus 40 provides an application to the service apparatus 20 at a request of the service apparatus 20, and the service apparatus 20 runs the application is described as an example, but the present invention is not limited to this example. When the service apparatus 20 connects the client terminal 10 with an appropriate application provision apparatus 40, the application provision apparatus 40 may directly provide the result information of running of the application to the client terminal 10.

The detailed operation methods of the client terminal 10 and the service apparatus 20 will be described below. As described above, the client terminal 10 and the service apparatus 20 of the present invention exchange various kinds of information via the communication network 30, and at this time, various forms of communication networks may be used as the communication network 30.

For example, it is possible to use wireless communication schemes, such as wireless local area network (WLAN), wireless fidelity (Wi-Fi), wireless broadband Internet (WiBro), worldwide interoperability for microwave access (WiMAX), and high speed downlink packet access (HSDPA), or wired communication schemes, such as Ethernet, xDSL (asymmetric digital subscriber line (ADSL) and very-high-bit-rate digital subscriber line (VDSL)), hybrid fiber coaxial cable (HFC), fiber to the curb (FTTC), and fiber to the home (FTTH).

In addition to the aforementioned communication schemes, other widely known communication schemes and all types of communication schemes to be developed in the future may be included.

The main constitution and the operation method of the client terminal 10 according to the first embodiment of the present invention will be first described below.

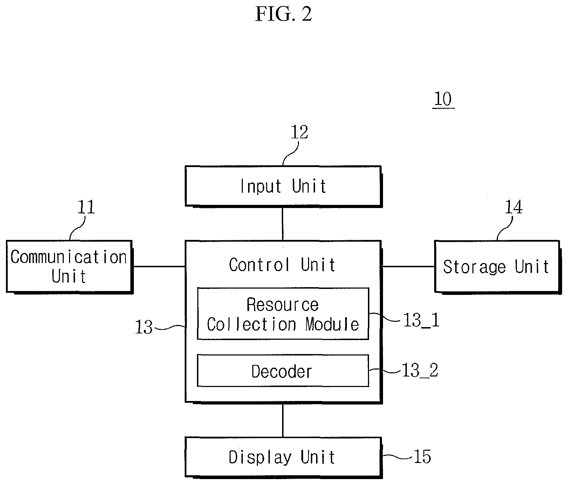

FIG. 2 is a block diagram showing the main constitution of a client terminal according to embodiments of the present invention.

Referring to FIGS. 1 and 2, the client terminal 10 according to the first embodiment of the present invention may include a communication unit 11, an input unit 12, a control unit 13, a storage unit 14, and a display unit 15.

Descriptions of the respective components are as follows: First, the communication unit 11 exchanges various kinds of information related to the service apparatus with the service apparatus 20 via the communication network 30. In particular, the communication unit 11 of the present invention may transmit a request to run a particular application to the service apparatus 20 and receive the result information of running of the application from the service apparatus 20.

In addition, the communication unit 11 may receive resource collection request information from the service apparatus 20 and transfer resource information to the service apparatus 20 together with user information necessary for user authentication. Also, the communication unit 11 may transmit various user inputs made during running of the application to the service apparatus 20.

The input unit 12 receives various kinds of information, such as numerical and text information, input by a user, and transfers signals that are input in connection with setting of various functions and function control of the client terminal 10 to the control unit 13. In particular, the input unit 12 of the present invention supports input of user information for user authentication to the service apparatus 20, and may support input of running request information for the particular application among a plurality of applications provided by the service apparatus 20. Also, the input unit 12 supports the user's input for performing various functions and operations during running of the application.

Such an input unit 12 may include at least one of a keypad and a touchpad that generate an input signal according to the user's touch or manipulation. Here, the input unit 12 may be configured together with the display unit 15, which will be described later, in the form of one touch panel (or touch screen) and simultaneously perform input and display functions. Also, the input unit 12 may include at least one of a key input means, such as a keyboard or a keypad, a touch input means, such as a touch sensor or a touchpad, a gesture input means including at least one of a gyro sensor, a geomagnetic sensor, an accelerometer, a proximity sensor, and a camera, and a voice input means. In addition to these, all types of input means that are currently under development or may be developed in the future may be further included.

The control unit 13 performs the overall control of the client terminal 10. For example, the control unit 13 controls the flow of signals for power supply to the respective components constituting the client terminal 10 and performing of functions. At this time, the control unit 13 may be a processing device that operates an operating system (OS) and the respective components, for example, a central processing unit (CPU).

In particular, at the user's request, the control unit 13 according to embodiments of the present invention attempts access to a service page provided by the service apparatus 20, for example, a web page. At this time, the control unit 13 may provide user information with which user authentication may be performed, such as a service subscription identification (ID) and a password, to the service apparatus 20. Subsequently, when user authentication is successfully performed based on the user information, a connection with the service apparatus 20 is established, and the control unit 13 receives application list information from the service apparatus 20 and displays the application list information through the display unit 15.

Subsequently, when the selection of a particular application is input from the user through the input unit 12, the control unit 13 transmits running request information for the application to the service apparatus 20 through the communication unit 11.

When resource collection request information is received from the service apparatus 20, the control unit 13 collects information on hardware specifications and software specifications of the client terminal 10. For example, the information may be the types of input devices supported by the input unit 12, display specifications supported by the display unit 15, and so on.

**[Table 1]**

| OS | X17 |
|---|---|
| CPU | Pen 3.2GHz |
| Graphic card | F 7800GT |
| Memory | 1GB |
| Input Device | Keyboard, Mouse |

When the resource collection request information is received from the service apparatus 20, the control unit 13 collects various kinds of information about the hardware specifications and the software specifications of the client terminal 10 as shown in Table 1 above and then transmits the information to the service apparatus 20.

Subsequently, the control unit 13 receives the result of running the application from the service apparatus 20 in real time and may output the received result through the display unit 15.

For the operation of the control unit 13 as described above, the control unit 13 may include a resource collection module 13_1 for collecting resources at a request of the service apparatus 20, and a stream data decoder 13_2 that receives the screen data of the result of running the application from the service apparatus 20 in real time and may decode and output the received screen data in real time. Here, the stream data decoder 13_2 may conform to H.264.

The resource collection module 13_1 and the stream data decoder 13_2 may be provided by the service apparatus 20 and prepared after the connection with the service apparatus 20 is established, and may be removed at a request of the service apparatus 20 or after a predetermined time period.

The storage unit 14 may temporarily store an application program necessary for a functional operation according to embodiments of the present invention and also various data generated during running of the application program. In particular, the storage unit 14 of the present invention may serve to temporarily store the application list information provided by the service apparatus 20 and the result information of running of the application requested by the user, and the temporarily stored data may be removed when the connection with the service apparatus 20 ends.

Such a storage unit 14 may generally include a program area and a data area. The program area stores information related to operation of the client terminal 10, such as an OS for booting up the client terminal 10, and the data area stores data generated according to the use of the client terminal 10. As mentioned above, information received from the service apparatus 20, etc. may be temporarily stored in the data area. Such a storage unit 14 may include a storage medium, such as a flash memory, a hard disk, a multimedia card micro-type memory (e.g., a secure digital (SD) memory or an extreme digital (XD) memory), a random access memory (RAM), or a read only memory (ROM).

The display unit 15 displays information on a series of operation states, operation results, etc. occurring while the client terminal 10 performs a function. In particular, the display unit 15 of the present invention may display the list information of applications provided by the service apparatus 20, and may also display various kinds of user input information generated through the input unit 12 while an application is run as well as the result information of running of the application.

Such a display unit 15 may be a liquid crystal display (LCD) display, a thin film transistor (TFT)-LCD display, an organic light emitting diode (OLED) display, a light emitting diode (LED) display, an active matrix organic LED (AMOLED) display, a flexible display, a three-dimensional (3D) display, or so on.

Thus far, the main components of the client terminal 10 have been described with reference to FIG. 2. However, all the components shown in FIG. 2 are not necessary components. The client terminal 10 may be composed of a larger number of components than the components shown in the drawing or a smaller number of components than the shown components.

Such a client terminal 10 of the present invention may be implemented in various forms. For example, as the client terminal 10 of the present invention, a mobile terminal, such as a smart phone, a tablet personal computer (PC), a personal digital assistant (PDA), a portable multimedia player (PMP), or a Motion Picture Experts Group (MPEG) audio layer 3 (MP3) player, or a fixed terminal, such as a smart television (TV) or a desktop computer, may be used.

The main constitution and the operation method of the service apparatus 20 according to the first embodiment of the present invention will be described below.

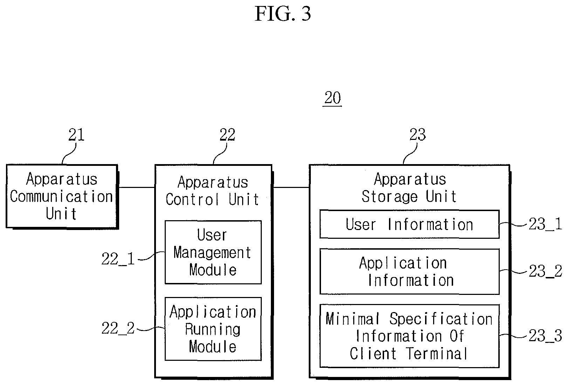

FIG. 3 is a block diagram showing the main constitution of a service apparatus according to embodiments of the present invention.

Referring to FIGS. 1 and 3, the service apparatus 20 according to the first embodiment of the present invention may include an apparatus communication unit 21, an apparatus control unit 22, and an apparatus storage unit 23.

First, the apparatus communication unit 21 exchanges information related to the plurality of client terminals 10 with the client terminals 10 via the communication network 30. In particular, when a connection with any one client terminal 10 is confirmed, the apparatus communication unit 21 may transmit the list information of providable applications to the client terminal 10. Also, when a request to run a particular application is received from the client terminal 10, the apparatus communication unit 21 may transmit the result information of running of the application to the client terminal 10.

In addition, under the control of the apparatus control unit 22, the apparatus communication unit 21 may transmit a resource collection request to the client terminal 10 or receive resource information from the client terminal 10 in response to the resource collection request.

The apparatus control unit 22 controls the overall operation of the service apparatus 20 of the present invention. In particular, when retained application information and the minimal specification information of the client terminal 10 capable of running the applications is received from the one or more application provision apparatuses 40, the apparatus control unit 22 of the present invention first stores the received information in the apparatus storage unit 23.

For example, when a first application provision apparatus 41 among the plurality of application provision apparatuses 40 has A game application and a second application provision apparatus 42 has B text-editing application, the first application provision apparatus 41 may transmit A game application information and the minimal specification information of a client terminal capable of running A game application to the service apparatus 20, and the second application provision apparatus 42 may transmit B text-editing application information and the minimal specification information of a client terminal capable of running B text-editing application to the service apparatus 20.

All the plurality of application provision apparatuses 40 may store the same application, or may divide one application into predetermined units according to a system design and then store the divided application.

In this way, when the retained application information and the minimal specification information of a client terminal capable of running the applications is received from the plurality of application provision apparatuses 40, the apparatus control unit 22 of the service apparatus 20 stores the received information in the apparatus storage unit 23.

For example, information as shown in [Table 2] below may be stored in the apparatus storage unit 23.

**[Table 2]**

| Application provision apparatus information | Retained application information | Minimal specification information of client terminal | |
|---|---|---|---|
| First application provision apparatus | Game 1 | OS | X17 |
| | | CPU | Pen 3.2GHz |
| | | Graphic card | F 7800GT |
| | | Memory | 1GB |
| | | Input device | Dedicated game pad |
| Second application provision apparatus | Text editing 1 | OS | X17 |
| | | CPU | Pen 2.0GHz |
| | | Graphic card | F 3800GT |
| | | Memory | 500MB |
| | | Input device | Keyboard, Mouse |

Subsequently, the apparatus control unit 22 confirms connection of any one client terminal 10. Here, connection of the client terminal 10 may be an operation in which a user accesses a service page provided by the service apparatus 20, for example, a web page or the access page of a wired or wireless application using the client terminal 10 and inputs and transmits user identification information, for example, an ID or a personal identification number (PIN), and a password corresponding to the user identification information to the service apparatus 20.

Subsequently, when user information is received from the client terminal 10, the apparatus control unit 22 of the service apparatus 20 performs user authentication based on the user information and determines whether the user is an appropriate user. When the user of the client terminal 10 is determined to be an appropriate user, the apparatus control unit 22 may provide the application list information of retained applications to the client terminal 10.

Then, when a request to run a particular application is received from the client terminal 10, the apparatus control unit 22 compares the resource information of the client terminal 10 with the minimal specification information of a client terminal capable of running the application stored in advance to correspond to the application of which running has been requested by the client terminal 10.

At this time, the resource information of the client terminal 10 may have been stored in advance to correspond to the user information in the apparatus storage unit 23. When the resource information has not been stored in advance, the apparatus control unit 22 may transmit a resource collection request to the client terminal 10. Subsequently, the apparatus control unit 22 may receive hardware and software resource information from the client terminal 10.

When it is determined that there is no resource collection module in the client terminal 10, the apparatus control unit 22 may provide a resource collection module to the client terminal 10 first. Here, the resource collection module may be provided in the form of an application programming interface (API).

When it is determined that the application requested by the client terminal 10 can be run on the client terminal 10 as the result of the comparison, the apparatus control unit 22 runs the application, encodes the result information of running, that is, screen data, in units of frames in real time, and transmits the encoded data to the client terminal 10.

At this time, when only the information on the retained applications has been stored and actual application data has not been stored, the apparatus control unit 22 may check an application provision apparatus 40 corresponding to the application, request the application from the checked application provision apparatus 40 to receive the application, and then run the application.

On the other hand, when the application requested by the client terminal 10 cannot be run on the client terminal, the apparatus control unit 22 may convert the application to be runnable on the client terminal 10.

For example, it is assumed that the resource information received from the client terminal 10 is as shown in [Table 1]. Also, it is assumed that the application information and the minimal specification information of a client terminal capable of running the applications stored in the apparatus storage unit 23 are as shown in [Table 2]. When a request to run Game 1 application is received from the client terminal 10, the apparatus control unit 22 compares the minimal specification information of a client terminal capable of running Game 1 application with the resource information of the client terminal 10. The apparatus control unit 22 determines that Game 1 application involves a dedicated game pad, but the client terminal 10 does not have the dedicated game pad and cannot run Game 1 application.

Subsequently, the apparatus control unit 22 converts the input method of the dedicated game pad supported by the application into an input method supporting a keyboard and a mouse. In other words, the application may consist of a plurality of program modules, and the apparatus control unit 22 converts an input-related module of the application to support a keyboard and a mouse. Alternatively, the apparatus control unit 22 may store in advance various inputs generated through a keyboard and a mouse to correspond to inputs of the dedicated game pad, and then, when input information generated through a keyboard and a mouse is applied from the client terminal 10, the apparatus control unit 22 may convert the input information into an input of the dedicated game pad corresponding to the input information. For example, when "A" input through a keyboard is received from the client terminal 10, the apparatus control unit 22 may convert "A" into the input of [LEFT] button of the dedicated game pad and process the input.

In addition, when the resource information of the client terminal 10 indicates that the client terminal 10 supports 700×800 resolution but the application requested by the client terminal 10 has been optimized for 1200×1000 resolution, the apparatus control unit 22 may convert the resolution of the application, run the application, and then provide the result information of running to the client terminal 10. As a resolution conversion method, various known technologies may be applied, and a high resolution may be converted into a low resolution by, for example, removing a macroblock of low importance.

Further, the apparatus control unit 22 may check a decoder supported by the client terminal 10 from the resource information of the client terminal 10, encode the application at a compression rate supported by the decoder, and transmit the encoded application to the client terminal 10. For example, when the decoder of the client terminal 10 is capable of decoding H.264 stream data, the apparatus control unit 22 may encode the screen data of running of the application in the H.264 scheme and then provide the encoded screen data to the client terminal 10.

Before converting the application to be runnable by the client terminal 10, the apparatus control unit 22 may first determine whether or not the application is convertible. When the application is unconvertible, the apparatus control unit 22 may check information on resources necessary for the client terminal 10 to run the application, and then transmit a guide message including the necessary resource information to the client terminal 10.

In this way, even if the service apparatus 20 does not have applications in advance in consideration of various specifications of the client terminals 10, the service apparatus 20 can easily provide an application to the client terminals 10 by converting a necessary portion of the application, and resource efficiency is increased.

For the above-described operation, the apparatus control unit 22 may include a user management module 22_1 and the application running module 22_2. Here, the user management module 22_1 may perform various kinds of management related to user authentication, and the application running module 22_2 may serve to manage, convert, and run applications and provide the result information of running of the applications to the client terminals 10.

In addition, in an embodiment of the present invention, a case in which the service apparatus 20 brings an application from an application provision apparatus 40, runs the application, and then transmits the result information of running to the client terminal 10 is described as an example, but the present invention is not limited to this example. The service apparatus 20 may check the application provision apparatus 40 having the application of which running has been requested by the client terminal 10 and then request running of the application from the application provision apparatus 40, and the application provision apparatus 40 may directly run the application and transmit the result information of running to the client terminal 10.

The apparatus storage unit 23 stores various kinds of information related to the cloud service of the present invention as described above, and may store user information 23_1 for performing user authentication, retained application information 23_2 received from the application provision apparatuses 40, and minimal specification information 23_3 of the client terminals 10 capable of running the applications. Also, the apparatus storage unit 23 may store and manage resource information to correspond to the user information 23_1.

Thus far, the main constitution and the operation method of the service apparatus 20 according to the first embodiment of the present invention have been described.

The service apparatus 20 according to the first embodiment of the present invention has been described to operate in a cloud-based method as an example, but can also be easily applied to a general server-based computing method.

A method for providing a cloud service according to the first embodiment of the present invention will be described below.

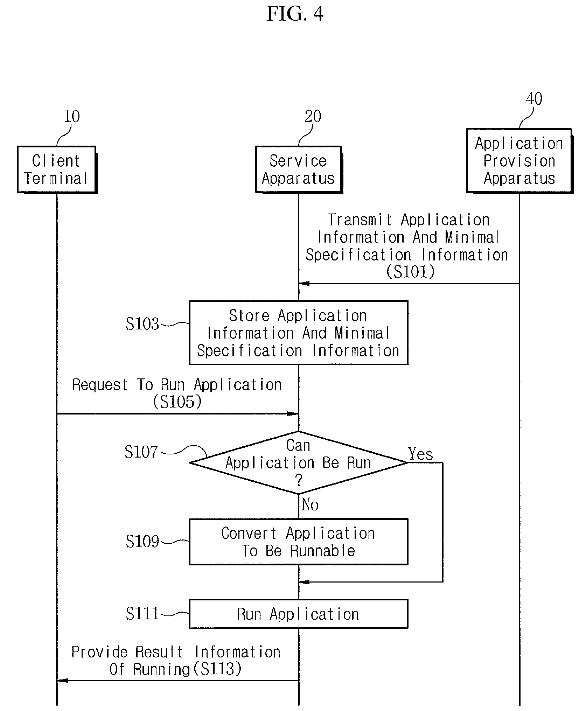

FIG. 4 is a data flowchart illustrating a method for providing a cloud service according to the first embodiment of the present invention.

Referring to FIG. 4, before providing applications to the client terminals 10, the service apparatus 20 receives information on retained applications and minimal specification information of a client terminal capable of running the applications from an application provision apparatus 40 having the applications (S101) and stores the received information (S103).

Here, upon registration of a new application with the application provision apparatus 40, retained application information and the minimal specification information of a client terminal capable of running the application may be automatically provided to the service apparatus 20. Also, in an embodiment of the present invention, a case in which the service apparatus 20 receives information on retained applications and minimal specification information from an application provision apparatus 40 and then stores the received information is described as an example, but the present invention is not limited to the example. The service apparatus 20 may bring applications as well as information on retained applications, and store and manage the applications and the information.

Subsequently, the service apparatus 20 receives a request to run a particular application from any one client terminal 10 (S105). Here, before receiving a request to run a particular application, the service apparatus 20 may receive user information necessary for user authentication from the client terminal 10 and perform user authentication based on the user information.

Subsequently, the service apparatus 20 determines whether the application of which running has been requested by the client terminal 10 can be run on the client terminal 10 (SI07).

When there is resource information stored in advance to correspond to the client terminal 10 in the service apparatus 20, the determination may be made by comparing the resource information with minimal specification information of a client terminal capable of running the application. Also, when there is no resource information stored in advance to correspond to the client terminal 10, the service apparatus 20 may request resource collection from the client terminal 10 and then check resource information.

Subsequently, when it is determined in operation S107 that the application cannot be run on the client terminal 10, the service apparatus 20 may convert the application to be runnable on the client terminal 10 (S109), run the application (S111), and provide the result information of running to the client terminal 10 (S113).

For example, when the client terminal 10 has no input device supported by the application, the service apparatus 20 may convert a program module, which processes an input to the application, to be suitable for an input device of the client terminal 10. Also, when a resolution supported by the application differs from the resolution of the client terminal 10, the service apparatus 20 may convert the application to be suitable for the resolution of the client terminal 10. Further, after checking the compression rate of a decoder of the client terminal 10, the service apparatus 20 may encode the screen data of running of the application at the compression rate supported by the decoder and provide the encoded screen data to the client terminal 10.

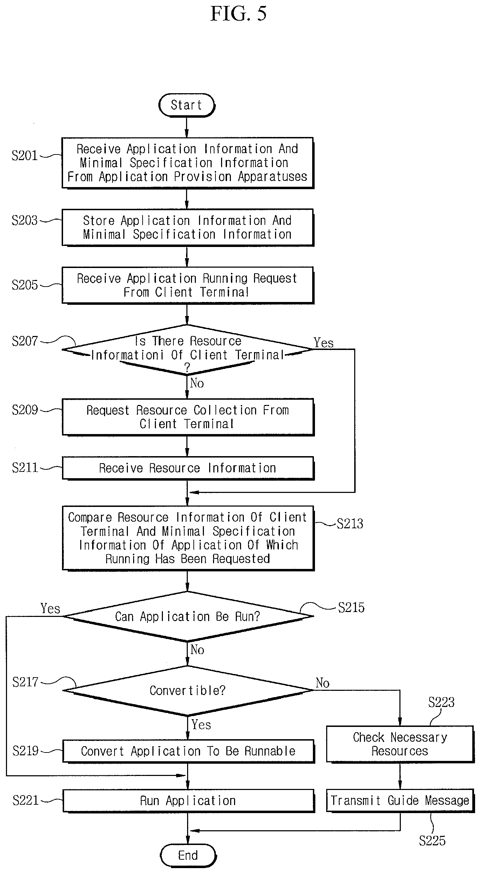

A method for the service apparatus 20 to provide a cloud service will be described in further detail below with reference to FIG. 5.

FIG. 5 is a flowchart illustrating a method for a service apparatus to provide a cloud service according to the first embodiment of the present invention.

Referring to FIGS. 1 and 5, as described above, the service apparatus 20 first receives information on retained applications and minimal specification information from the one or more application provision apparatuses 40 (S201), and stores the received information in the apparatus storage unit 23 in the service apparatus 20 (S203).

Subsequently, when the service apparatus 20 receives a request to run an application from any one client terminal 10 (S205), the service apparatus 20 first determines whether there is resource information stored in advance to correspond to the client terminal 10 (S207).

When it is determined that there is no resource information stored in advance to correspond to the client terminal 10, the service apparatus 20 may request resource collection from the client terminal 10 (S209) and then receive resource information (S211). When it is determined that there is resource information stored in advance to correspond to the client terminal 10, the above operations may be omitted. Also, even if there is resource information stored in advance to correspond to the client terminal 10, when the hardware and software specifications of the client terminal 10 are changed, the changes may be sensed, and the service apparatus 20 may request resource collection from the client terminal 10.

Subsequently, the service apparatus 20 may compare minimal specification information of a client terminal for running the application stored in advance to correspond to the application in operation S203 with the resource information of the client terminal 10 (S213), and determines whether the application can be run on the client terminal 10 (S215).

When it is determined that the application cannot be run on the client terminal 10, the service apparatus 20 may determine whether or not the application is convertible (S217).

When the application is convertible, the service apparatus 20 converts the application to be runnable on the client terminal 10 and run the application (S221), encodes the result information of running, for example, screen data, and provides the screen data to the client terminal 10. The client terminal 10 having received the screen data may decode the screen data and output the screen data through a screen.

Since the above-described process is performed in real time, a user can easily use the application provided by the service apparatus 20 without particular recognition.

On the other hand, when the application is unconvertible, the service apparatus 20 may check resource information necessary for the client terminal 10 to run the application (S223), and then transmit a guide message about the necessary resource information to the client terminal 10 (S225). For example, a guide message "The corresponding application requires dedicated haptic equipment. To purchase the dedicated haptic equipment, please click [OK] button." may be provided.

In this way, the user may receive an application suitable for the specifications of his or her terminal from the service apparatus 20 and use the application, and may be additionally guided with information necessary to run an application that cannot be run on his or her terminal, such that the user's convenience may be improved.

Further, even if the service apparatus 20 that provides a cloud service does not have applications in advance in consideration of all the specifications of the client terminals 10, the service apparatus 20 converts only a necessary portion of an application as occasion demands and then provides the application to the user, such that resources can be used more efficiently.

Next, a system for providing a cloud service according to a second embodiment of the present invention will be described.

FIG. 1 is a diagram schematically showing the constitution of a cloud system according to embodiments of the present invention.

Referring to FIG. 1, a cloud system 100 according to the second embodiment of the present invention may include one or more client terminals 10, a service apparatus 20 that supports service connections of the client terminals 10, and a communication network 30.

In addition to these, a plurality of application provision apparatuses 40 that provide one or more applications may be further included.

Brief descriptions of the respective components are as follows: The client terminal 10 denotes a user's terminal that establishes a connection to the service apparatus 20 via the communication network 30 and may use various functions provided by the service apparatus 20. In particular, the client terminal 10 according to embodiments of the present invention may connect to the service apparatus 20 to request running of a particular application among a plurality of applications provided by the service apparatus 20, receive the result information of running of the application from an application provision apparatus 40, and output the received result information, thereby using the application.

The service apparatus 20 supports service connections of the plurality of client terminals 10. In particular, when the service connection of any one client terminal 10 is confirmed, the service apparatus 20 according to embodiments of the present invention may provide the list information of providable applications to the client terminal 10. The client terminal 10 receives and outputs the list information, and when a user's selection of any one application is input, transmits a request to run the application to the service apparatus 20.

When a request to run the application is received from any one client terminal 10, the service apparatus 20 checks an application provision apparatus 40 having the application, for example, a first application provision apparatus 41. Then, the service apparatus 20 transmits an application running request to the checked first application provision apparatus 41. At this time, identification information of the client terminal 10 may be further included and transmitted, and the first application provision apparatus 41 having received the application running request runs the corresponding application, encodes the result information of running, for example, screen data, in units of frames in real time, and transmits the encoded data to the client terminal 10.

When the first application provision apparatus 41 is in an overload state of providing applications to the plurality of client terminals 10 or in a problematic state in which it is not possible to provide the application, the first application provision apparatus 41 may transmit application provision unable state information to the service apparatus 20. The service apparatus 20 having received the application provision unable state information checks another application provision apparatus having the application, for example, a second application provision apparatus 42, and then transmits an application running request to the second application provision apparatus 42. The second application provision apparatus 42 having received the application running request runs the application and then transmits the result information of running to the client terminal 10.

For the above-described operations, the service apparatus 20 may receive information on retained applications and minimal specification information of a client terminal capable of running the applications from the plurality of application provision apparatuses 40 and store the received information in advance. Subsequently, when a request to run a particular application is received from any one client terminal 10, the service apparatus 20 may check an application provision apparatus 40 having the application based on the resource information of the client terminal 10 first.

The plurality of application provision apparatuses 40 receiving an application running request from the service apparatus 20 may include an encoder capable of encoding result information, for example, screen data, of running of the application in real time after the application is run. Here, the application that may be provided by the application provision apparatuses 40 to the client terminals 10 can be any applications including a text-editing application, a game application, a media, such as music or movie, player application, and other service applications.

With the cloud system 100 according to the second embodiment of the present invention, a user can smoothly use an application regardless of a network situation. Also, the service apparatus 20 connects an appropriate application provision apparatus 40 with a client terminal 10 according to the situations of the application provision apparatuses 40 providing applications, such that a flexible service can be provided even if the number of client terminals 10 requesting a cloud service increases.

In the second embodiment of the present invention, a case in which, when the service apparatus 20 connects a client terminal 10 with an appropriate application provision apparatus 40, the application provision apparatus 40 directly provides the result information of running of the application to the client terminal 10 is described as an example, but the present invention is not limited to this example. An application provision apparatus 40 may provide an application to the service apparatus 20, and the service apparatus 20 may run the application and provide the result information of running of the application to the client terminal 10.

The detailed operation methods of the client terminal 10 and the service apparatus 20 will be described below. As described above, the client terminal 10 and the service apparatus 20 of the present invention exchange various kinds of information via the communication network 30, and at this time, various forms of communication networks may be used as the communication network 30.

For example, it is possible to use wireless communication schemes, such as WLAN, Wi-Fi, WiBro, WiMAX, and HSDPA, or wired communication schemes, such as Ethernet, xDSL (ADSL and VDSL), HFC, FTTC, and FTTH.

In addition to the aforementioned communication schemes, other widely known communication schemes and all types of communication schemes to be developed in the future may be included.

The main constitution and the operation method of the client terminal 10 according to the second embodiment of the present invention will be first described below.

FIG. 2 is a block diagram showing the main constitution of a client terminal according to embodiments of the present invention.

Referring to FIGS. 1 and 2, the client terminal 10 according to the second embodiment of the present invention may include a communication unit 11, an input unit 12, a control unit 13, a storage unit 14, and a display unit 15.

Descriptions of the respective components are as follows: First, the communication unit 11 exchanges various kinds of information related to the service apparatus with the service apparatus 20 via the communication network 30. In particular, the communication unit 11 of the present invention may transmit a request to run a particular application to the service apparatus 20 and receive the result information of running of the application from the service apparatus 20.

In addition, the communication unit 11 may receive resource collection request information from the service apparatus 20 and transfer resource information to the service apparatus 20 together with user information necessary for user authentication. Also, the communication unit 11 may transmit various user inputs made during running of the application to the service apparatus 20.

The input unit 12 receives various kinds of information, such as numerical and text information, input by a user, and transfers signals that are input in connection with setting of various functions and function control of the client terminal 10 to the control unit 13. In particular, the input unit 12 of the present invention supports input of user information for user authentication to the service apparatus 20, and may support input of running request information for the particular application among a plurality of applications provided by the service apparatus 20. Also, the input unit 12 supports the user's input for performing various functions and operations during running of the application.

Such an input unit 12 may include at least one of a keypad and a touchpad that generate an input signal according to the user's touch or manipulation. Here, the input unit 12 may be configured together with the display unit 15, which will be described later, in the form of one touch panel (or touch screen) and simultaneously perform input and display functions. Also, the input unit 12 may include at least one of a key input means, such as a keyboard or a keypad, a touch input means, such as a touch sensor or a touchpad, a gesture input means including at least one of a gyro sensor, a geomagnetic sensor, an accelerometer, a proximity sensor, and a camera, and a voice input means. In addition to these, all types of input means that are currently under development or may be developed in the future may be further included.

The control unit 13 performs the overall control of the client terminal 10. For example, the control unit 13 controls the flow of signals for power supply to the respective components constituting the client terminal 10 and performing of functions. At this time, the control unit 13 may be a processing device that operates an operating system (OS) and the respective components, for example, a CPU.

In particular, at the user's request, the control unit 13 according to embodiments of the present invention attempts access to a service page provided by the service apparatus 20, for example, a web page. At this time, the control unit 13 may provide user information with which user authentication may be performed, such as a service subscription ID and a password input by the user, to the service apparatus 20. Subsequently, when user authentication is successfully performed based on the user information, a connection with the service apparatus 20 is established, and the control unit 13 receives application list information from the service apparatus 20 and displays the application list information through the display unit 15.

Subsequently, when the selection of a particular application is input from the user through the input unit 12, the control unit 13 transmits running request information for the application to the service apparatus 20 through the communication unit 11.

When resource collection request information is received from the service apparatus 20, the control unit 13 collects information on hardware specifications and software specifications of the client terminal 10. For example, the information may be the types of input devices supported by the input unit 12, display specifications supported by the display unit 15, and so on.

**[Table 3]**

| | |
|---|---|
| OS | X17 |
| CPU | Pen 3.2GHz |
| Graphic card | F 7800GT |
| Memory | 1GB |
| Input Device | Keyboard, Mouse |

When the resource collection request information is received from the service apparatus 20, the control unit 13 collects various kinds of information about the hardware specifications and the software specifications of the client terminal 10 as shown in Table 3 above and then transmits the information to the service apparatus 20.

Subsequently, the control unit 13 receives the result of running the application from the service apparatus 20 in real time and may output the received result through the display unit 15.

For the operation of the control unit 13 as described above, the control unit 13 may include a resource collection module 13_1 for collecting resources at the request of the service apparatus 20, and a stream data decoder 13_2 that receives screen data of the result of running the application from the service apparatus 20 in real time and may decode and output the received screen data in real time. Here, the stream data decoder 13_2 may conform to H.264.

The resource collection module 13_1 and the stream data decoder 13_2 may be provided by the service apparatus 20 and prepared after the connection with the service apparatus 20 is established, and may be removed at a request of the service apparatus 20 or after a predetermined time period.

The storage unit 14 may temporarily store an application program necessary for a functional operation according to embodiments of the present invention and also various data generated during running of the application program. In particular, the storage unit 14 of the present invention may serve to temporarily store the application list information provided by the service apparatus 20 and the result information of running of the application requested by the user, and the temporarily stored data may be removed when the connection with the service apparatus 20 ends.

Such a storage unit 14 may generally include a program area and a data area. The program area stores information related to operation of the client terminal 10, such as an OS for booting up the client terminal 10, and the data area stores data generated according to the use of the client terminal 10. As mentioned above, information received from the service apparatus 20, etc. may be temporarily stored in the data area. Such a storage unit 14 may include a storage medium, such as a flash memory, a hard disk, a multimedia card micro-type memory (e.g., an SD memory or an XD memory), a RAM, or a ROM.

The display unit 15 displays information on a series of operation states, operation results, etc. occurring while the client terminal 10 performs a function. In particular, the display unit 15 of the present invention may display the list information of applications provided by the service apparatus 20, and may also display various kinds of user input information generated through the input unit 12 while an application is run as well as the result information of running of the application.

Such a display unit 15 may be an LCD display, a TFT-LCD display, an OLED display, an LED display, an AMOLED display, a flexible display, a 3D display, or so on.

Thus far, the main components of the client terminal 10 have been described with reference to FIG. 2. However, all the components shown in FIG. 2 are not necessary components. The client terminal 10 may be composed of a larger number of components than the components shown in the drawing or a smaller number of components than the shown components.

Such a client terminal 10 according to the second embodiment of the present invention may be implemented in various forms. For example, as the client terminal 10 of the present invention, a mobile terminal, such as a smart phone, a tablet PC, a PDA, a PMP, or an MP3 player, or a fixed terminal, such as a smart TV or a desktop computer, may be used.

The main constitution and the operation method of the service apparatus 20 according to the second embodiment of the present invention will be described below.

FIG. 3 is a block diagram showing the main constitution of a service apparatus according to embodiments of the present invention.

Referring to FIGS. 1 and 3, the service apparatus 20 according to the second embodiment of the present invention may include an apparatus communication unit 21, an apparatus control unit 22, and an apparatus storage unit 23.

First, the apparatus communication unit 21 exchanges information related to the plurality of client terminals 10 with the client terminals 10 via the communication network 30. In particular, when a connection with any one client terminal 10 is confirmed, the apparatus communication unit 21 may transmit the list information of providable applications to the client terminal 10. Also, when a request to run a particular application is received from the client terminal 10, the apparatus communication unit 21 may transmit the result information of running of the application to the client terminal 10.

In addition, under the control of the apparatus control unit 22, the apparatus communication unit 21 may transmit a resource collection request to the client terminal 10 or receive resource information from the client terminal 10 in response to the resource collection request.

The apparatus control unit 22 controls the overall operation of the service apparatus 20 according to the second embodiment of the present invention. In particular, when retained application information and the minimal specification information of the client terminal 10 capable of running the applications are received from the one or more application provision apparatuses 40, the apparatus control unit 22 according to the second embodiment of the present invention first stores the received information in the apparatus storage unit 23.

For example, when the first application provision apparatus 41 among the plurality of application provision apparatuses 40 has A game application and a second application provision apparatus 42 has B text-editing application, the first application provision apparatus 41 may transmit A game application information and the minimal specification information of a client terminal capable of running A game application to the service apparatus 20, and the second application provision apparatus 42 may transmit B text-editing application information and the minimal specification information of a client terminal capable of running B text-editing application to the service apparatus 20.

The plurality of application provision apparatuses 40 may store the same application. For example, both the first application provision apparatus 41 and the second application provision apparatus 42 may have A game application. At this time, the minimal specification information of a client terminal for A game application supported by the first application provision apparatus 41 may differ from the minimal specification information of a client terminal for A game application supported by the second application provision apparatus 42. Also, one application may be divided into predetermined units according to a system design, and then the divided application may be retained by the plurality of application provision apparatuses 40.

In this way, when the retained application information and the minimal specification information of a client terminal capable of running the applications are received from the plurality of application provision apparatuses 40, the apparatus control unit 22 of the service apparatus 20 stores the received information in the apparatus storage unit 23.

For example, information as shown in [Table 4] below may be stored in the apparatus storage unit 23.

**[Table 4]**

| Application provision apparatus information | Retained application information | Minimal specification information of client terminal | |
|---|---|---|---|
| First application provision apparatus | Game 1 | OS | X17 |
| | | CPU | Pen 3.2GHz |
| | | Graphic card | F 7800GT |
| | | Memory | 1GB |
| | | Input device | Dedicated game pad |
| Second application provision apparatus | Game 1 | OS | X17 |
| | | CPU | Pen 3.2GHz |
| | | Graphic card | F 7800GT |
| | | Memory | 1GB |
| | | Input device | Keyboard, Mouse |

Subsequently, the apparatus control unit 22 checks connection of any one client terminal 10. Here, connection of the client terminal 10 may be an operation in which a user accesses a service page provided by the service apparatus 20, for example, a web page or the access page of a wired or wireless application using the client terminal 10 and inputs and transmits user identification information, for example, an ID or a PIN, and a password corresponding to the user identification information to the service apparatus 20.

Subsequently, when user information is received from the client terminal 10, the apparatus control unit 22 of the service apparatus 20 performs user authentication based on the user information and determines whether the user is an appropriate user. When the user of the client terminal 10 is determined to be an appropriate user, the apparatus control unit 22 may provide the application list information of retained applications to the client terminal 10.

Then, the apparatus control unit 22 receives a request to run a particular application from the client terminal 10. For example, the apparatus control unit 22 may receive a request to run Game 1 application from the client terminal 10.

Subsequently, the apparatus control unit 22 checks an application provision apparatus 40 having Game 1 application of which running has been requested by the client terminal 10. Since it is checked that both the first application provision apparatus 41 and the second application provision apparatus 42 have Game 1 application, the apparatus control unit 22 compares the resource information of the client terminal 10 with the minimal specification information of a client terminal capable of running the application stored in advance to correspond to the application.

At this time, the resource information of the client terminal 10 may have been stored in advance to correspond to the user information in the apparatus storage unit 23. When the resource information has not been stored in advance, the apparatus control unit 22 may transmit a resource collection request to the client terminal 10. Subsequently, the apparatus control unit 22 may receive hardware and software resource information from the client terminal 10.

When it is determined that there is no resource collection module in the client terminal 10, the apparatus control unit 22 may provide a resource collection module to the client terminal 10 first. Here, the resource collection module may be provided in the form of an API.

The operation in which the apparatus control unit 22 compares the resource information of the client terminal 10 with the minimal specification information of a client terminal capable of running the application stored in advance to correspond to the application is described in detail with an example as follows: It is assumed that the resource information received from the client terminal 10 is as shown in [Table 1]. Also, it is assumed that the application information and the minimal specification information of a client terminal capable of running the applications stored in the apparatus storage unit 23 are as shown in [Table 2]. When a request to run Game 1 application is received from the client terminal 10, the apparatus control unit 22 compares the minimal specification information of a client terminal capable of running Game 1 application with the resource information of the client terminal 10. The apparatus control unit 22 determines that Game 1 application of the first application provision apparatus 41 involves a dedicated game pad, but the client terminal 10 does not have the dedicated game pad and cannot run Game 1 application.

On the other hand, the apparatus control unit 22 determines that Game 1 application of the second application provision apparatus 42 can be run on the client terminal 10 normally.

Subsequently, the apparatus control unit 22 requests running of Game 1 application from the second application provision apparatus 42. At this time, the identification information of Game 1 application and the identification information of the client terminal 10 may be transferred to the second application provision apparatus 42 together. The second application provision apparatus 42 having received the identification information checks its current state. When it is possible to provide Game 1 application to the client terminal 10 in the current state, the second application provision apparatus 42 runs Game 1 application, and then encodes and transmits the screen data of running to the client terminal 10 in real time.

On the other hand, when the second application provision apparatus 42 is currently providing applications to many other client terminals and is in an overload state, the second application provision apparatus 42 notifies the service apparatus 20 that it is not possible to provide Game 1 application to the client terminal 10. The service apparatus 20 having received the notification requests running of Game 1 application from the first application provision apparatus 41 having the same application as Game 1 application. At this time, the service apparatus 20 may provide not only the identification information of Game 1 application and the identification information of the client terminal 10 but also the resource information of the client terminal 10 to the first application provision apparatus 41.

Since the input device of the client terminal 10 differs from the input device supported by Game 1 application of the first application provision apparatus 41, the first application provision apparatus 41 having received the information converts the input method of the dedicated game pad supported by Game 1 application into an input method supporting a keyboard and a mouse, runs Game 1 application, and then provides the result information of running to the client terminal 10.

In other words, the application may consist of a plurality of program modules, and the first application provision apparatus 41 converts an input-related module of the application to support a keyboard and a mouse. Alternatively, the first application provision apparatus 41 may store in advance various inputs generated through a keyboard and a mouse to correspond to inputs of the dedicated game pad, and then, when input information generated through a keyboard and a mouse is applied from the client terminal 10, the first application provision apparatus 41 may convert the input information into an input of the dedicated game pad corresponding to the input information. For example, when "A" input through a keyboard is received from the client terminal 10, the first application provision apparatus 41 may convert "A" into the input of [LEFT] button of the dedicated game pad and process the input.

In the second embodiment of the present invention, a case in which the first application provision apparatus 41 converts Game 1 application to be suitable for the environment of the client terminal 10, runs the converted application, and then provides the result information of running of the converted application to the client terminal 10 at a request of the service apparatus 20 has been described as an example, but the present invention is not limited to this example. The first application provision apparatus 41 may transfer information on its own Game 1 application to the service apparatus 20, and the service apparatus 20 may convert Game 1 application to be suitable for the environment of the client terminal 10, run the application, and then provide the result information of running of the application to the client terminal 10.

In addition, in the above-described example, a case in which the first application provision apparatus 41 converts the input method of its own application into an input method supportable by the client terminal 10 has been described. However, the application may be converted to a resolution suitable for the client terminal 10 or encoded at a compression rate supported by the decoder of the client terminal 10, and then provided to the client terminal 10.

For the above-described operation, the apparatus control unit 22 may include a user management module 22_1 and an application running module 22_2. Here, the user management module 22_1 may perform various kinds of management related to user authentication, and the application running module 22_2 may serve to receive retained application information from the plurality of application provision apparatuses 40 or to check application provision apparatuses 40 having applications requested by the client terminals 10. In addition, when the service apparatus 20 directly runs an application and then provides the result information of running to the client terminal 10, the application running module 22_2 may perform running, encoding, etc. of the application.

The apparatus storage unit 23 stores various kinds of information related to the cloud service of the present invention as described above, and may store user information 23_1 for performing user authentication, retained application information 23_2 received from the application provision apparatuses 40, and minimal specification information 23_3 of the client terminals 10 capable of running the applications. Also, the apparatus storage unit 23 may store and manage resource information to correspond to the user information 23_1.

Thus far, the main constitution and the operation method of the service apparatus 20 according to the second embodiment of the present invention have been described.

The service apparatus 20 according to the second embodiment of the present invention has been described to operate in a cloud-based method as an example, but can also be easily applied to a general server-based computing method.

A method for providing a cloud service according to the second embodiment of the present invention will be described below.

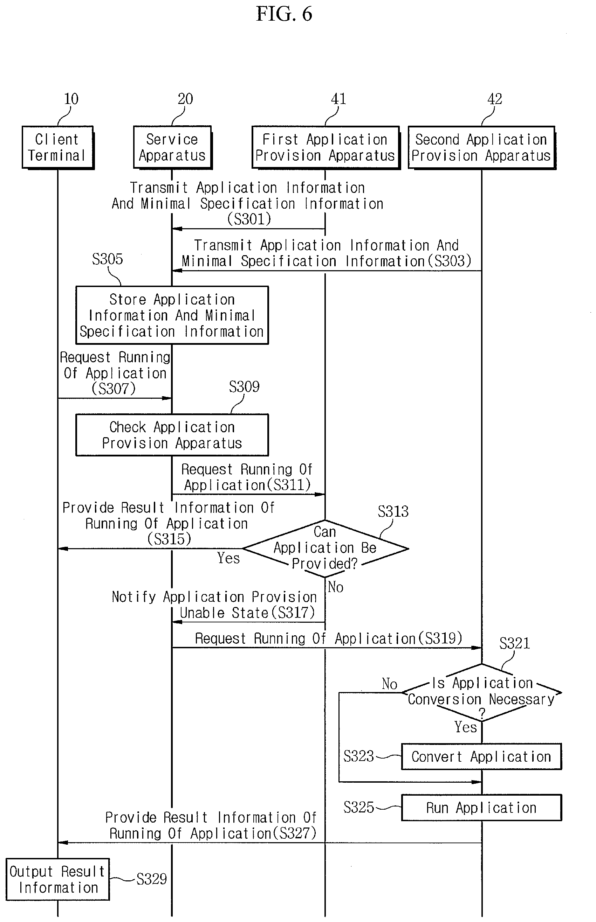

FIG. 6 is a data flowchart illustrating a method for providing a cloud service according to the second embodiment of the present invention.

Referring to FIG. 6, first, the first application provision apparatus 41 and the second application provision apparatus 42 transmit information on their own applications and the minimal specification information of a client terminal capable of running the applications to the service apparatus 20 (S301 and S303).

Here, upon registration of a new application with the first application provision apparatus 41 and the second application provision apparatus 42, retained application information and minimal specification information of a client terminal capable of running the application may be provided to the service apparatus 20, and the information may be transmitted at a request of the service apparatus 20.

Then, the service apparatus 20 stores the retained application information and the minimal specification information received from the first application provision apparatus 41 and the second application provision apparatus 42 (S305). Subsequently, the service apparatus 20 receives a request to run a particular application from any one client terminal 10 (S307). Here, before receiving a request to run a particular application, the service apparatus 20 may receive user information necessary for user authentication from the client terminal 10 and perform user authentication based on the user information.

Subsequently, the service apparatus 20 checks an application provision apparatus having the application of which running has been requested by the client terminal 10 (S309). At this time, the resource information of the client terminal 10 may be compared with the minimal specification information stored in advance to correspond to the applications in operation S305, such that an application provision apparatus may be checked.

When it is checked that the first application provision apparatus 41 has the application, the service apparatus 20 requests running of the application from the first application provision apparatus 41 (S311). Then, the first application provision apparatus 41 determines whether it is possible to provide the application in the current state (S313). When it is possible to provide the application, the first application provision apparatus 41 runs the application and provides the result information of running to the client terminal 10.

On the other hand, when it is not possible to provide the application, the first application provision apparatus 41 transmits application provision unable state information to the service apparatus 20 (S317), and the service apparatus 20 having received the application provision unable state information checks another application provision apparatus having the application and requests running of the application from the second application provision apparatus 42 (S319).

At this time, the service apparatus 20 may further transmit the resource information of the client terminal 10 to the second application provision apparatus 42. When a conversion of the application is necessary (S321), the second application provision apparatus 42 having received the resource information converts the application to be runnable on the client terminal 10 (S323), runs the application (S325), and then provides the result information of running (S327).

For example, when the client terminal 10 has no input device supported by the application, the second application provision apparatus 42 may convert a program module, which processes an input to the application, to be suitable for an input device of the client terminal 10. Also, when a resolution supported by the application differs from the resolution of the client terminal 10, the second application provision apparatus 42 may convert the application to be suitable for the resolution of the client terminal 10. Further, after checking the compression rate of a decoder of the client terminal 10, the second application provision apparatus 42 may encode the screen data of running of the application at the compression rate supported by the decoder and provide the encoded screen data to the client terminal 10.

Subsequently, the client terminal 10 decodes the result information of running of the application, for example, the encoded screen data, transmitted from the second application provision apparatus 42 and outputs the result information (S329).

In addition, when the client terminal 10 terminates the service while using the application, the second application provision apparatus 42 that has been providing the application to the client terminal 10 may transmit information related to the application use of the client terminal 10 to the service apparatus 20. For example, when the client terminal 10 ends the connection while a game application is run, the second application provision apparatus 42 transmits information, such as the last time point of saving the game and the duration of using the game, to the service apparatus 20. Subsequently, when a request to run the application is received from the client terminal 10, the service apparatus 20 first requests running of the application from the first application provision apparatus 41 as described above. When the first application provision apparatus 41 can provide the application to the client terminal 10, the service apparatus 20 transfers the information related to application use and received from the second application provision apparatus 42 to the first application provision apparatus 41, and the first application provision apparatus 41 having received the information related to application use runs the application from the last time point of saving the game and then may provide result information of running to the client terminal 10.

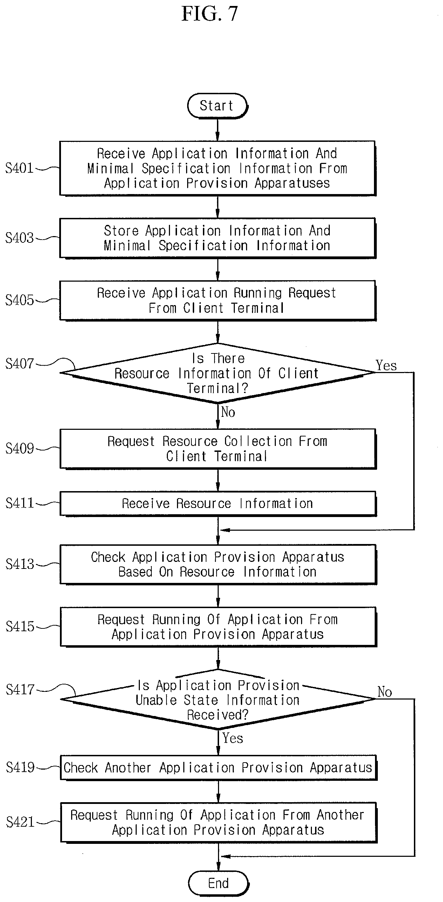

A method for the service apparatus 20 to provide a cloud service will be described in further detail below with reference to FIG. 7.

FIG. 7 is a flowchart illustrating a method for a service apparatus to provide a cloud service according to the second embodiment of the present invention.

Referring to FIGS. 1 and 7, as described above, the service apparatus 20 first receives information on retained applications and minimal specification information from the one or more application provision apparatuses 40 (S401), and stores the received information in the apparatus storage unit 23 in the service apparatus 20 (S403).

Subsequently, when the service apparatus 20 receives a request to run an application from any one client terminal 10 (S405), the service apparatus 20 first determines whether there is resource information stored in advance to correspond to the client terminal 10 (S407).

When it is determined that there is no resource information stored in advance to correspond to the client terminal 10, the service apparatus 20 may request resource collection from the client terminal 10 (S409) and then receive resource information (S411). When it is determined that there is resource information stored in advance to correspond to the client terminal 10, the above operations may be omitted. Also, even if there is resource information stored in advance to correspond to the client terminal 10, when the hardware and software specifications of the client terminal 10 are changed, the changes may be sensed, and the service apparatus 20 may request resource collection from the client terminal 10.

Subsequently, the service apparatus 20 may compare minimal specification information of a client terminal for running the application stored in advance to correspond to the application in operation S403 with the resource information of the client terminal 10, and check an application provision apparatus having the application (S413).

Subsequently, the service apparatus 20 requests running of the application from the checked application provision apparatus, for example, the first application provision apparatus 41 (S415). When application provision unable state information is received from the first application provision apparatus 41 (S417), the service apparatus 20 checks another application provision apparatus, for example, the second application provision apparatus 42 (S419).

Here, the second application provision apparatus 42 has stored therein an application that is the same as the application of the first application provision apparatus 41 but has different minimal specification information of a client terminal corresponding thereto.

The service apparatus 20 requests running of the application from the checked second application provision apparatus 42 (S421), and the second application provision apparatus 42 may run the application and provide result information of running to the client terminal 10 when it is possible to provide the application.

In this way, when a user uses a cloud service that is much affected by a network situation, the user can smoothly use an application regardless of the network situation. Also, a service apparatus connects an appropriate application provision apparatus with a client terminal according to the situations of application provision apparatuses for providing applications, such that a cloud service can be flexibly provided even if the number of client terminals requesting the cloud service increases.

Thus far, methods of providing a cloud service according to embodiments of the present invention have been described.

The methods of providing a cloud service according to embodiments of the present invention can be implemented as a computer-readable code in a computer-readable recording medium. The computer-readable recording medium can separately include program instructions, data files, data structures, etc. or include a combination thereof. The computer-readable recording medium includes all types of recording devices in which data readable by a computer system is stored. Examples of the computer-readable recording medium include magnetic media, such as a hard disk, a floppy disk, and a magnetic tape, optical media, such as a compact disk read only memory (CD-ROM) and a digital video disk (DVD), magneto-optical media, such as a floptical disk, and hardware devices that are specially configured to store and execute program instructions, such as a ROM, a RAM, and a flash memory.

In addition, the computer-readable recording medium is distributed in computer systems connected via a network so that computer-readable codes can be stored and executed in a distributed manner. Functional programs, codes, and code segments used to implement the present invention can be easily deduced by programmers in the technical field to which the present invention pertains.

Preferred embodiments for exemplifying the technical spirit of the present invention have been described and shown above, but the present invention is not limited to shown and described constitutions and effects. Those of ordinary skill in the art would appreciate that various changes and modifications of the present invention can be made. Therefore, it is to be understood that all suitable changes, modifications, and equivalents fall within the scope of the present invention.

Although specific embodiments of the present invention have been described above, various alterations can be made without departing from the scope of the present invention. For example, various methods can be used to convert an application to be suitable for a client terminal.

A computer program (also known as a program, software, software application, script, or code) that is installed in an apparatus according to the present invention and executes a method according to the present invention can be written in any form of programming language, including compiled or interpreted languages or intuitive or procedural languages, and it can be deployed in any form, including as a stand alone program or as a module, component, subroutine, or other unit suitable for use in a computing environment. A computer program does not necessarily correspond to a file in a file system. A program can be stored in a single file dedicated to a requested program, in multiple coordinated files (e.g., files that store one or more modules, sub-programs, or portions of code), or in a portion of a file that holds other programs or data (e.g., one or more scripts stored in a markup language document). A computer program can be deployed to be executed on one computer or on multiple computers that are located at one site or distributed across multiple sites and interconnected by a communication network.

The specification includes details of a number of specific implements, but it should be understood that the details do not limit any invention or what is claimable in the specification but rather describe features of specific embodiments of a specific invention. Features described in the specification in the context of individual embodiments may be implemented as a combination in a single embodiment. In contrast, features described in the specification in the context of a single embodiment can be implemented in multiple embodiments individually or in an appropriate sub-combination. Further, the features may operate in a certain combination and may initially described as claimed in the combination, but one or more features may be excluded from the claimed combination in some cases, and the claimed combination may be changed into a sub-combination or a modification of a sub-combination.

Similarly, although operations are described in a certain order on the drawings, it should not be understood that the operations be executed in the certain order or in a sequential order to obtain desired results, or that all the operations be executed. In addition, it should not be understood that the separation of various system components in the above-described embodiments is required in all embodiments, and it should be understood that the above-described program components and systems may be incorporated into a single software product or may be packaged in multiple software products.

### [Industrial Applicability]

The present invention relates to a method for providing a cloud service, and more particularly, to a cloud service providing method for, when an application of which running has been requested by a client terminal cannot be run the client terminal, converting the application to be runnable on the client terminal, running the converted application, and then providing the result information of running of the converted application to the client terminal, and a system and an apparatus for the method.

According to the inventive method for providing a cloud service and the system and the apparatus for the method, when an application of which running has been requested by a client terminal cannot be run on the client terminal, it is possible to convert the application to be runnable, run the converted application, and then provide the result information of running of the converted application to the client terminal. For this reason, even if a service apparatus does not have in advance applications in which all the specifications of the client terminal are taken into consideration, the service apparatus converts only a necessary portion according to the specifications of the client terminal and provides the converted application to the client terminal, such that the service can be efficiently provided.

In addition, the present invention relates to a method for providing a cloud service, and more particularly, to a cloud service providing method for, when an application provision apparatus having an application of which running has been requested by a client terminal cannot provide the application to the client terminal, requesting running of the application from another application provision apparatus having the application, and a system and an apparatus for the method.

With the method, the system, and the apparatus, a client terminal can smoothly use an application without being affected by a network situation, and a service apparatus connects an appropriate application provision apparatus with a client terminal according to the situations of application provision apparatuses for providing applications, such that the cloud service can be flexibly provided even if the number of client terminals requesting the cloud service increases. In this way, it is possible to contribute to the development of the cloud service industry.

Furthermore, there is an enough possibility to commercialize or sell the present invention, and the present invention can be clearly implemented in practice. Consequently, the present invention has industrial applicability.

## Claims

1. A cloud system comprising:
a service apparatus (20) configured to:
when a request to run a particular application is received from any one client terminal (10), check previously stored resource information of the client terminal, compare the resource information with minimal specification information of a client terminal capable of using the application, and then determine, as a result of the comparison, whether or not the application can be used on the client terminal (10),
when it is determined that the client terminal (10) can use the application, run the application and transmit results information of the running of the application to the client terminal (10),
when it is determined that the client terminal (10) cannot use the application, determine whether or not the application is convertible;
if the application is convertible, convert the application to be usable on the client terminal (10), run the application, and transmit results information of the running of the converted application to the client terminal (10); and
if the application is unconvertible, check resource information necessary for the client terminal (10) to run the application, and then transmit a guide message about the necessary resource information to run the application to the client terminal (10); and the system further comprising a client terminal (10) configured to request running of the particular application from the service apparatus (20), receive the result information of the running of the application from the service apparatus (20), and output the result information.

2. A service apparatus comprising:
an apparatus storage unit (23) configured to store one or more applications and minimal specification information of a client terminal capable of using the applications and resource information of the client terminal; and
an apparatus control unit (22) configured to check previously stored resource information of the client terminal (10), when a request to run a particular application is received from any one client terminal (10), compare minimal specification information of the application with the resource information of the client terminal (10), determine, as a result of the comparison, whether or not the application can be used on the client terminal (10), when it is determined that the client terminal (10) can use the application, run the application and transmit results information of the running of the application to the client terminal (10), when it is determined that the client terminal cannot use the application, determine whether or not the application is convertible, and if the application is convertible, convert the application to be usable on the client terminal, run the application, and then transmit result information of the running of the converted application to the client terminal (10), and if the application is unconvertible, check resource information necessary for the client terminal to run the application, and then transmit a guide message about the necessary resource information to run the application to the client terminal (10).

3. The service apparatus of claim 2, wherein, when the request to run the particular application is received from the client terminal (10), if there is no previously stored resource information of the client terminal (10), the apparatus control unit is configured to request resource collection from the client terminal (10) and then check the resource information.

4. The service apparatus of claim 2, wherein, when the client terminal (10) has no input device supported by the application, the apparatus control unit is configured to convert the application to be suitable for an input device of the client terminal (10).

5. The service apparatus of claim 2, wherein, when a resolution supported by the application differs from a resolution of the client terminal (10), the apparatus control unit is configured to convert the application to be suitable for the resolution of the client terminal (10).

6. The service apparatus of claim 2, wherein, after checking a decoder of the client terminal (10), the apparatus control unit is configured to encode the application at a compression rate supported by the decoder and transmits the encoded application to the client terminal (10).

7. A method for providing a cloud service, the method comprising:
receiving a request to run a particular application from any one client terminal (10);
checking previously stored resource information of the client terminal (10);
comparing minimal specification information of a client terminal capable of using the application with the resource information of the client terminal (10) to determine whether or not the application can be used on the client terminal (10);
when it is determined as a result of the comparison that the application can be used on the client terminal (10), running the application and transmitting result information of the running of the application to the client terminal;
when it is determined that the application cannot be used on the client terminal, converting the application to be usable on the client terminal (10); and
running the converted application and transmitting result information of the running of the application to the client terminal,
wherein the converting of the application comprises:
determining whether the application is convertible;
when it is determined that the application is unconvertible, checking information on resources necessary for the client terminal to run the application; and
transmitting a guide message including the checked necessary resource information to the client terminal.

8. The method of claim 7, further comprising, before the receiving of the request, receiving information on retained applications and minimal specification information of a client terminal (10) capable of running the applications from one or more application provision apparatuses and storing the received information,
wherein the converting of the application comprises receiving the application from an application provision apparatus having the application and then converting the application.

9. The method of claim 7, further comprising, after the determining of whether or not the application can be used on the client terminal (10), when it is determined that the application can be used on the client terminal (10), running the application and then encoding and transmitting screen data of the running to the client terminal in real time.

10. A computer-readable recording medium storing a program for executing the method of one of claims 7 to 9.

## Patentansprüche

1. Cloud-System, das Folgendes umfasst:
eine Dienstvorrichtung (20), die zu Folgendem konfiguriert ist:
dann, wenn eine Anforderung, eine bestimmte Anwendung auszuführen, von einem Client-Endgerät (10) empfangen wird, Überprüfen von vorher gespeicherten Betriebsmittelinformationen des Client-Endgeräts, Vergleichen der Betriebsmittelinformationen mit Informationen über eine minimale Spezifikation eines Endgeräts, das die Anwendung verwenden kann, und dann Bestimmen als ein Ergebnis des Vergleichs, ob die Anwendung auf dem Client-Endgerät (10) verwendet werden kann oder nicht,
dann, wenn bestimmt wird, dass das Client-Endgerät (10) die Anwendung verwenden kann, Ausführen der Anwendung und Senden von Ergebnisinformationen des Ausführens der Anwendung an das Client-Endgerät (10),
dann, wenn bestimmt wird, dass das Client-Endgerät (10) die Anwendung nicht verwenden kann, Bestimmen, ob die Anwendung umsetzbar ist oder nicht;
dann, wenn die Anwendung umsetzbar ist, Umsetzen der Anwendung, so dass sie auf dem Client-Endgerät (10) verwendbar ist, Ausführen der Anwendung und Senden von Ergebnisinformationen des Ausführens der umgesetzten Anwendung an das Client-Endgerät (10); und
dann, wenn die Anwendung nicht umsetzbar ist, Überprüfen von Betriebsmittelinformationen, die für das Client-Endgerät (10) notwendig sind, um die Anwendung auszuführen, und dann Senden einer Anleitungsnachricht über die notwendigen Betriebsmittelinformationen, um die Anwendung auszuführen, an das Client-Endgerät (10); und
wobei das System ferner umfasst:
ein Client-Endgerät (10), das konfiguriert ist, ein Ausführen der bestimmten Anwendung von der Dienstvorrichtung (20) anzufordern, die Ergebnisinformationen des Ausführens der Anwendung von der Dienstvorrichtung (20) zu empfangen und die Ergebnisinformationen auszugeben.

2. Dienstvorrichtung, die Folgendes umfasst:
eine Vorrichtungsspeichereinheit (23), die konfiguriert ist, eine oder mehrere Anwendungen und Informationen über eine minimale Spezifikation eines Client-Endgeräts, das die Anwendungen verwenden kann, und Betriebsmittelinformationen des Client-Endgeräts zu speichern; und
eine Vorrichtungssteuereinheit (22), die konfiguriert ist, vorher gespeicherte Betriebsmittelinformationen des Client-Endgeräts (10) zu überprüfen, wenn eine Anforderung, eine bestimmte Anwendung auszuführen, von einem Client-Endgerät (10) empfangen wird, Informationen über die minimale Spezifikation der Anwendung mit den Betriebsmittelinformationen des Client-Endgeräts (10) zu vergleichen, als ein Ergebnis des Vergleichs zu bestimmen, ob die Anwendung auf dem Client-Endgerät (10) verwendet werden kann oder nicht,
dann, wenn bestimmt wird, dass das Client-Endgerät (10) die Anwendung verwenden kann, die Anwendung auszuführen und Ergebnisinformationen des Ausführens der Anwendung an das Client-Endgerät (10) zu senden,
dann, wenn bestimmt wird, dass das Client-Endgerät die Anwendung nicht verwenden kann, zu bestimmen, ob die Anwendung umsetzbar ist oder nicht, und dann, wenn die Anwendung umsetzbar ist, die Anwendung so umzusetzen, dass sie auf dem Client-Endgerät verwendbar ist, die Anwendung auszuführen und dann die Ergebnisinformationen des Ausführens der umgesetzten Anwendung an das Client-Endgerät (10) zu senden und dann, wenn die Anwendung nicht umsetzbar ist, Betriebsmittelinformationen, die für das Client-Endgerät notwendig sind, um die Anwendung auszuführen, zu überprüfen, und dann eine Anleitungsnachricht über die notwendigen Betriebsmittelinformationen, um die Anwendung auszuführen, an das Client-Endgerät (10) zu senden.

3. Dienstvorrichtung nach Anspruch 2, wobei dann, wenn die Anforderung die bestimmte Anwendung auszuführen, von dem Client-Endgerät (10) empfangen wird, dann, wenn es keine vorher gespeicherten Betriebsmittelinformationen des Client-Endgeräts (10) gibt, die Vorrichtungssteuereinheit konfiguriert ist, eine Betriebsmittelsammlung von dem Client-Endgerät (10) anzufordern und dann die Betriebsmittelinformationen zu überprüfen.

4. Dienstvorrichtung nach Anspruch 2, wobei dann, wenn das Client-Endgerät (10) keine Eingabevorrichtung besitzt, die durch die Anwendung unterstützt wird, die Vorrichtungssteuereinheit konfiguriert ist, die Anwendung so umzusetzen, dass sie für eine Eingabevorrichtung des Client-Endgeräts (10) geeignet ist.

5. Dienstvorrichtung nach Anspruch 2, wobei dann, wenn eine Auflösung, die durch die Anwendung unterstützt wird, von einer Auflösung des Client-Endgeräts (10) verschieden ist, die Vorrichtungssteuereinheit konfiguriert ist, die Anwendung so umzusetzen, dass sie für die Auflösung des Client-Endgeräts (10) geeignet ist.

6. Dienstvorrichtung nach Anspruch 2, wobei nach dem Überprüfen eines Decodierers des Client-Endgeräts (10) die Vorrichtungssteuereinheit konfiguriert ist, die Anwendung mit einer Kompressionsrate zu codieren, die durch den Decodierer unterstützt wird, und die codierte Anwendung an das Client-Endgerät (10) zu senden.

7. Verfahren zum Bereitstellen eines Cloud-Dienstes, wobei das Verfahren Folgendes umfasst:
Empfangen einer Anforderung, eine bestimmte Anwendung auszuführen, von einem Client-Endgerät (10);
Überprüfen von vorher gespeicherten Betriebsmittelinformationen des Client-Endgeräts (10);
Vergleichen von Informationen über eine minimale Spezifikation eines Client-Endgeräts, das die Anwendung verwenden kann, mit den Betriebsmittelinformationen des Client-Endgeräts (10), um zu bestimmen, ob die Anwendung auf dem Client-Endgerät (10) verwendet werden kann oder nicht;
dann, wenn als ein Ergebnis des Vergleichs bestimmt wird, dass die Anwendung auf dem Client-Endgerät (10) verwendet werden kann, Ausführen der Anwendung und Senden der Ergebnisinformationen des Ausführens der Anwendung an das Client-Endgerät;
dann, wenn bestimmt wird, dass die Anwendung nicht auf dem Client-Endgerät verwendet werden kann, Umsetzen der Anwendung, so dass sie auf dem Client-Endgerät (10) verwendbar ist; und
Ausführen der umgesetzten Anwendung und Senden der Ergebnisinformationen des Ausführens der Anwendung an das Client-Endgerät,
wobei das Umsetzen der Anwendung Folgendes umfasst:
Bestimmen, ob die Anwendung umsetzbar ist;
dann, wenn bestimmt wird, dass die Anwendung umsetzbar ist, Überprüfen von Informationen über Betriebsmittel, die für das Client-Endgerät notwendig sind, um die Anwendung auszuführen; und
Senden einer Anleitungsnachricht, die die überprüften notwendigen Betriebsmittelinformationen enthält, an das Client-Endgerät.

8. Verfahren nach Anspruch 7, das ferner umfasst, vor dem Empfangen der Anforderung Informationen über zurückgehaltenen Anwendungen und Informationen über eine minimale Spezifikation eines Client-Endgeräts (10), das die Anwendungen ausführen kann, von einer oder mehreren Anwendungsbereitstellungsvorrichtungen zu empfangen und die empfangenen Informationen zu speichern,
wobei das Umsetzen der Anwendung umfasst, die Anwendung von einer Anwendungsbereitstellungsvorrichtung, die die Anwendung besitzt, zu empfangen und dann die Anwendung umzusetzen.

9. Verfahren nach Anspruch 7, das ferner umfasst, nach dem Bestimmen, ob die Anwendung auf dem Client-Endgerät (10) verwendet werden kann oder nicht, dann, wenn bestimmt wird, dass die Anwendung auf dem Client-Endgerät (10) verwendet werden kann, die Anwendung auszuführen und dann zu codieren und Bildschirmdaten des Ausführens in Echtzeit an das Client-Endgerät zu senden.

10. Computerlesbares Aufzeichnungsmedium, das ein Programm zum Ausführen des Verfahrens nach einem der Ansprüche 7 bis 9 speichert.

## Revendications

1. Système en nuage, comprenant :
un appareil de service (20) configuré pour :
lorsqu'une requête d'exécution d'une application particulière est reçue d'un terminal client (10) quelconque, vérifier des informations de ressources précédemment stockées du terminal client, comparer les informations de ressources à des informations de spécification minimale d'un terminal client capable d'utiliser l'application, et ensuite déterminer, suite à la comparaison, si l'application peut être utilisée sur le terminal client (10) ou non,
lorsqu'il est déterminé que le terminal client (10) peut utiliser l'application, exécuter l'application et transmettre au terminal client (10) des informations de résultat de l'exécution de l'application,
lorsqu'il est déterminé que le terminal client (10) ne peut pas utiliser l'application, déterminer si l'application peut être convertie ou non ;
si l'application peut être convertie, convertir l'application pour qu'elle soit utilisable sur le terminal client (10), exécuter l'application, et transmettre au terminal client (10) des informations de résultat de l'exécution de l'application convertie ; et
si l'application ne peut pas être convertie, vérifier des informations de ressources nécessaires au terminal client (10) pour exécuter l'application, et ensuite transmettre au terminal client (10) un message-guide concernant les informations de ressources nécessaires pour exécuter l'application ;
et le système comprend en outre un terminal client (10) configuré pour demander l'exécution de l'application particulière de l'appareil de service (20), recevoir les informations de résultat de l'exécution de l'application de l'appareil de service (20), et sortir les informations de résultat.

2. Appareil de service, comprenant :
une unité de stockage d'appareil (23) configurée pour stocker une ou plusieurs applications et des informations de spécification minimale d'un terminal client capable d'utiliser les applications et les informations de ressources du terminal client ; et
une unité de commande d'appareil (22) configurée pour vérifier des informations de ressources précédemment stockées du terminal client (10), lorsqu'une requête d'exécution d'une application particulière est reçue d'un terminal client (10) quelconque, comparer des informations de spécification minimale de l'application aux informations de ressources du terminal client (10), déterminer, suite à la comparaison, si l'application peut être utilisée sur le terminal client (10) ou non, lorsqu'il est déterminé que le terminal client (10) peut utiliser l'application, exécuter l'application et transmettre au terminal client (10) des informations de résultat de l'exécution de l'application, lorsqu'il est déterminé que le terminal client ne peut pas utiliser l'application, déterminer si l'application peut être convertie ou non, et si l'application peut être convertie, convertir l'application pour qu'elle soit utilisable sur le terminal client, exécuter l'application, et ensuite transmettre au terminal client (10) des informations de résultat de l'exécution de l'application convertie, et si l'application ne peut pas être convertie, vérifier des informations de ressources nécessaires au terminal client pour exécuter l'application, et ensuite transmettre au terminal client (10) un message-guide concernant les informations de ressources nécessaires pour exécuter l'application.

3. Appareil de service selon la revendication 2, dans lequel, lorsque la requête d'exécution de l'application particulière est reçue du terminal client (10), s'il n'y a pas d'informations de ressources précédemment stockées du terminal client (10), l'unité de commande d'appareil est configurée pour demander une collection de ressources du terminal client (10) et ensuite pour vérifier les informations de ressources.

4. Appareil de service selon la revendication 2, dans lequel, lorsque le terminal client (10) ne dispose d'aucun dispositif d'entrée pris en charge par l'application, l'unité de commande d'appareil est configurée pour convertir l'application pour qu'elle convienne à un dispositif d'entrée du terminal client (10) .

5. Appareil de service selon la revendication 2, dans lequel, lorsqu'une résolution prise en charge par l'application diffère d'une résolution du terminal client (10), l'unité de commande d'appareil est configurée pour convertir l'application pour qu'elle convienne à la résolution du terminal client (10).

6. Appareil de service selon la revendication 2, dans lequel, après avoir vérifié un décodeur du terminal client (10), l'unité de commande d'appareil est configurée pour coder l'application à un taux de compression pris en charge par le décodeur et transmet l'application codée au terminal client (10).

7. Procédé pour fournir un service en nuage, le procédé comprenant les étapes consistant à :
recevoir une requête d'exécution d'une application particulière d'un terminal client (10) quelconque ;
vérifier des informations de ressources précédemment stockées du terminal client (10) ;
comparer des informations de spécification minimale d'un terminal client capable d'utiliser l'application aux informations de ressources du terminal client (10) pour déterminer si l'application peut être utilisée sur le terminal client (10) ou non ;
lorsqu'il est déterminé, suite à la comparaison, que l'application peut être utilisée sur le terminal client (10), exécuter l'application et transmettre au terminal client des informations de résultat de l'exécution de l'application ;
lorsqu'il est déterminé que l'application ne peut pas être utilisée sur le terminal client, convertir l'application pour qu'elle soit utilisable sur le terminal client (10) ; et
exécuter l'application convertie et transmettre au terminal client des informations de résultat de l'exécution de l'application,
dans lequel la conversion de l'application comprend les étapes consistant à :
déterminer si l'application peut être convertie ;
lorsqu'il est déterminé que l'application ne peut pas être convertie, vérifier des informations concernant les ressources nécessaires au terminal client pour exécuter l'application ; et
transmettre au terminal client un message-guide comprenant les informations de ressources nécessaires.

8. Procédé selon la revendication 7, comprenant en outre, avant la réception de la requête, la réception d'informations concernant des applications retenues et des informations de spécification minimale d'un terminal client (10) capable d'exécuter les applications d'un ou de plusieurs appareils de fourniture d'application et le stockage des informations reçues,
dans lequel la conversion de l'application comprend la réception de l'application d'un appareil de fourniture d'application disposant de l'application et ensuite la conversion de l'application.

9. Procédé selon la revendication 7, comprenant en outre, après avoir déterminé si l'application peut être utilisée sur le terminal client (10) ou non, lorsqu'il est déterminé que l'application peut être utilisée sur le terminal client (10), l'exécution de l'application et ensuite le codage et la transmission au terminal client de données d'écran de l'exécution en temps réel.

10. Support d'enregistrement lisible par ordinateur stockant un programme pour exécuter le procédé selon l'une quelconque des revendications 7 à 9.
